# EUROPÄISCHE PATENTANMELDUNG

(11) **EP 3 614 541 A1**
(43) Veröffentlichungstag der Anmeldung: **26.02.2020**
(21) Anmeldenummer: 18189934.5
(22) Anmeldetag: 21.08.2018
(51) Int. Cl.: H02K 15/02, H02K 1/02, B22F 7/02, H01F 1/22, H01F 27/255, H01F 41/02, H01F 3/08

(54) **VERFAHREN ZUM HERSTELLEN EINES EINEN MAGNETISCHEN FLUSS FÜHRENDEN BAUTEILS FÜR EINE ELEKTRISCHE ODER ELEKTRONISCHE KOMPONENTE MIT GRADIERUNG VON MAGNETISCHEN EIGENSCHAFTEN, BAUTEIL SOWIE KOMPONENTE**

(71) Anmelder: Siemens Aktiengesellschaft, 80333 München (DE)
(72) Erfinder: Buschbeck, Jörg, 90482 Nürnberg (DE); Rieger, Gotthard, 80636 München (DE); Schuh, Carsten, 85598 Baldham (DE); Soller, Thomas, 94469 Deggendorf (DE); Vollmer, Rolf, 36129 Gersfeld (DE)

(57) **Zusammenfassung**

Die Erfindung betrifft ein Verfahren zum Herstellen eines einen magnetischen Fluss führenden Bauteils (1) für eine elektrische oder elektronische Komponente (2), mit den Schritten: Bereitstellen eines ersten Elements (3), welches einen ersten weichmagnetisches Werkstoff umfasst, Bereitstellen zumindest eines zweiten Elements (4, 5), welches einen vom dem ersten Werkstoff verschiedenen, zweiten weichmagnetisches Werkstoff umfasst, und Verbinden des ersten Elements (3) und des zumindest einen zweiten Elements (4, 5) zu dem Bauteil (1), wobei zumindest eine zweite Element (4, 5) stoffschlüssig miteinander verbunden werden und das erste Element (3) und das zumindest eine zweite Element (4, 5) derart bereitgestellt werden, dass magnetische Eigenschaften entlang des Bauteils (1) einen Gradienten aufweisen.

## Beschreibung

Die vorliegende Erfindung betrifft ein Verfahren zum Herstellen eines einen magnetischen Fluss führenden Bauteils für eine elektrische oder elektronische Komponente. Bei dem Verfahren werden ein erstes Element, welches einen ersten weichmagnetischen Werkstoff umfasst, und zumindest ein zweites Element, welches einen von dem ersten Werkstoff verschiedenen, zweiten weichmagnetischen Werkstoffen umfasst, bereitgestellt. Des Weiteren werden das erste Element und das zumindest eine zweite Element zu dem Bauteil verbunden. Darüber hinaus betrifft die vorliegende Erfindung ein einen magnetischen Fluss führendes Bauteil für eine elektrische oder elektronische Komponente. Schließlich betrifft die vorliegende Erfindung eine elektrische oder elektronische Komponente.

Bauteile, welche einen magnetischen Fluss führen, werden in elektrischen Komponenten eingesetzt. Eine solche elektrische Komponente kann eine elektrische Maschine, wie ein Motor oder Generator, ein Transformator oder dergleichen sein. Die dort verwendeten Bauteile werden üblicherweise aus weichmagnetischen und homogenen Werkstoffen gefertigt. Beispielsweise werden entsprechende Weichferrite oder Stapel von weichmagnetischen Blechen verwendet. Im Betrieb sind die Bauteile zeitlich aber insbesondere auch räumlich unterschiedlich belastet beziehungsweise werden unterschiedliche magnetisiert. Im Design wird zwar versucht, die magnetische Ansteuerung so zu wählen, dass ein Kompromiss mit den weiteren Anforderungen, beispielsweise der mechanischen Festigkeit und der thermischen Belastung, gefunden wird. Dennoch kommt es im Magnetmaterial beziehungsweise in dem Bauteil insbesondere in der Nähe von Polen und/oder Luftspalten, zu Sättigungserscheinungen die zu erhöhten Verlusten und Erwärmung führen.

Bisher wird die mechanische und elektromagnetische Optimierung von Magnetkernen sowie Stator- und Rotorblechpaketen durch die Auswahl des weichmagnetischen Werkstoffs, beispielsweise durch die Legierungen der Mikrostruktur, sowie Maßnahmen im Design, beispielsweise die Zahnform, die Form der Verbindungsstege sowie der Kühlbohrungen, bestimmt. Obwohl die magnetische Belastung im Betrieb lokal sehr unterschiedlich ist, werden aus Gründen der Aufbautechnik und der struktur-mechanischen Stabilität meist homogene Materialien eingesetzt. Beispielsweise werden für Anwendungen höchster Leistungsdichte Blechpakete aus Eisen und Cobalt eingesetzt, die dann aber ebenfalls magnetisch nicht optimal ausgenutzt werden.

Hierzu beschreibt die DE 10 2013 218 829 A1 einen Rotor für eine elektrische Maschine, welcher ein aus Blechen geschichtetes Blechpaket umfasst. Dabei sind in dem Blechen Magnet-Ausnehmungen ausgebildet, in welchen Magnete integriert sind. Es wird also durch die Bleche eine Art Rahmen gebildet, in welchen Inlays integriert werden. Dabei sind die Inlays bevorzugt aus einem weichmagnetischen Pulververbundwerkstoff ausgebildet.

Es ist Aufgabe der vorliegenden Erfindung, eine Lösung aufzuzeigen, wie Bauteile für elektrische oder elektronische Komponenten bezüglich der Führung eines magnetischen Flusses optimiert bereitgestellt werden können.

Diese Aufgabe wird erfindungsgemäß durch ein Verfahren, durch ein Bauteil sowie durch eine Komponente mit den Merkmalen gemäß den unabhängigen Ansprüchen gelöst. Vorteilhafte Weiterbildungen der vorliegenden Erfindung sind in den abhängigen Ansprüchen angegeben.

Ein erfindungsgemäßes Verfahren zum Herstellen eines einen magnetischen Fluss führenden Bauteils für eine elektrische oder elektronische Komponente umfasst das Bereitstellen eines ersten Elements, welches einen ersten weichmagnetischen Werkstoff umfasst. Des Weiteren umfasst das Verfahren das Bereitstellen zumindest eines zweiten Elements, welches einen vom dem ersten Werkstoff verschiedenen, zweiten weichmagnetisches Werkstoff umfasst. Zudem umfasst das Verfahren das Verbinden des ersten Elements und des zumindest einen zweiten Elements zu dem Bauteil. Hierbei ist vorgesehen, dass das erste Element und das zumindest eine zweite Element stoffschlüssig miteinander verbunden werden. Darüber hinaus werden das erste Element und das zumindest eine zweite Element derart bereitgestellt, dass magnetische Eigenschaften entlang des Bauteils einen Gradienten aufweisen.

Mithilfe des Verfahrens soll ein Bauteil hergestellt werden, welches in einer elektrischen oder elektronischen Komponente eingesetzt werden kann. Die Komponente kann beispielsweise eine elektrische Maschine oder ein Transformator sein. Bei den Komponenten kann es sich auch um ein Elektronikbauteil, ein Gehäuse für eine Elektronik oder einen Sensor handeln. Das Bauteil dient im Betrieb der Komponenten zur Führung eines statischen oder dynamischen magnetischen Flusses. Dieser kann zur Energieübertragung, Energiewandlung, Erzeugung eines Geberfeldes und/oder zur Abschirmung dienen. Das Bauteil wird aus dem ersten Element und dem zumindest einen zweiten Element gefertigt. Bevorzugt ist es vorgesehen, dass das Bauteil aus einer Mehrzahl von Elementen gefertigt wird. Dabei ist das erste Element aus dem ersten weichmagnetischen Werkstoff gefertigt. Das zweite Element ist aus dem zweiten weichmagnetischen Werkstoff gefertigt. Dabei unterscheidet sich der erste weichmagnetische Werkstoff von dem zweiten weichmagnetischen Werkstoff.

Gemäß einem wesentlichen Aspekt der vorliegenden Erfindung ist es vorgesehen, dass das erste Element und das zumindest eine zweite Element stoffschlüssig miteinander verbunden werden. Der vorliegenden Erfindung liegt die Erkenntnis zugrunde, dass ein Fügen von den Elementen einerseits sehr aufwendig ist und andererseits meist mechanisch nicht ausreichend (langzeit-)stabil ist. Hierdurch ergeben sich häufig ungewünschte Auswirkungen auf die Flussführung. Durch die stoffschlüssige Verbindung der Elemente, die aus den unterschiedlichen weichmagnetischen Werkstoffen gefertigt sind, kann eine optimierte Führung des magnetischen Flusses erreicht werden.

Darüber hinaus ist es vorgesehen, dass das erste Element und das zumindest eine zweite Element derart bereitgestellt werden beziehungsweise zueinander angeordnet werden, dass magnetische Eigenschaften entlang des Bauteils einen Gradienten aufweisen. Wie bereits erläutert, unterscheiden sich der erste weichmagnetische Werkstoff, aus dem das erste Element gefertigt ist, und der zweite magnetische Wirkstoff, aus dem das zweite Element gefertigt ist voneinander. Insbesondere können sich der erste weichmagnetische Werkstoff und der zweite weichmagnetische Werkstoff durch eine Konzentration beziehungsweise einen Massenanteil eines weichmagnetischen Materials voneinander unterscheiden. Somit ergibt sich bevorzugt bezüglich des Massenanteils des weichmagnetischen Materials ein Gradient. Dies führt auch zu einem Gradienten der magnetischen Eigenschaften beziehungsweise zu einer Gradierung der magnetischen Eigenschaften. Die magnetischen Eigenschaften können beispielsweise die Sättigungsinduktion, die Koerzitivfeldstärke, eine Magnetostriktion oder dergleichen beschreiben. Dabei weisen die magnetischen Eigenschaften entlang des Bauteils beziehungsweise ortsbezogen einen Gradienten auf. Dieser Gradient kann entlang einer vorbestimmten Richtung durch das Bauteil verlaufen. Die Gradierung der magnetischen Eigenschaften erlaubt durch die gezielte beziehungsweise lokale Anpassung der magnetischen Eigenschaften einen optimierten Aufbau bezüglich der magnetischen Flussführung.

Bevorzugt wird zum Bereitstellen des ersten Elements eine erste Suspension, welche den ersten Werkstoff umfasst, aufgetragen und zum Bereitstellen des zweiten Elements wird eine zweite Suspension, welche den zweiten Werkstoff umfasst, zumindest bereichsweise auf die erste Suspension aufgetragen. Zum Herstellen der Elemente können also entsprechende Suspensionen beziehungsweise Partikel gefüllte Pasten verwendet werden. Die erste Suspension kann weichmagnetische Partikel aufweisen, die den ersten weichmagnetischen Werkstoff bilden. Zudem kann die zweite Suspension weichmagnetische Partikel aufweisen, die den zweiten weichmagnetischen Werkstoff bilden. Die Verwendung von Suspension erlaubt eine einfache Formgebung und zugleich eine zuverlässige stoffschlüssige Verbindung zwischen den Elementen.

In einer Ausführungsform wird die erste Suspension und/oder die zweite Suspension mittels eines dreidimensionalen Druckverfahrens aufgetragen. Hierbei können die erste Suspension und die zweite Suspension mithilfe eines Druckkopfes beziehungsweise einer Düse abgegeben werden. Darüber hinaus kann die Inkjet-Drucktechnik genutzt werden, um die erste Suspension und/oder die zweite Suspension aufzutragen. Beispielsweise kann der sogenannte Mehrkomponentendruck verwendet werden, um einen stoffschlüssigen Aufbau aus den verschiedenen weichmagnetischen Werkstoffen zu erreichen. Auf diese Weise kann die Einstellung der Gradierung der magnetischen Eigenschaften beispielsweise in einer Ebene erfolgen.

Gemäß einer weiteren Ausführungsform werden die erste Suspension/oder die zweite Suspension mittels eines Siebdruckverfahrens aufgetragen. Bei dem Siebdruckverfahren können die erste Suspension und/oder die zweite Suspension zunächst auf ein Trägerelement beziehungsweise ein Substrat aufgetragen werden und anschließend mit Hilfe eines Rakels verteilt werden. Dabei können die unterschiedlichen Suspensionen nacheinander beziehungsweise übereinander aufgetragen werden. Es kann auch vorgesehen sein, dass die jeweiligen Schichten nebeneinander aufgebracht werden. Somit kann ein sogenannter Mehrlagendruck genutzt werden, um den Gradienten der magnetischen Eigenschaften bereitzustellen. Grundsätzlich kann das Bauteil mittels eines Druckverfahrens hergestellt werden. Das Bauteil ist ein dreidimensionaler Körper, der mittels des Druckverfahrens hergestellt wird. Dabei kann der Gradient entlang einer beliebigen Richtung des Bauteils verlaufen.

In einer weiteren Ausführungsform werden die erste Suspension und die zweite Suspension zum Herstellen des Bauteils gesintert. Wie bereits erläutert, können die zumindest zwei Suspensionen zunächst aufgebracht werden. Im Anschluss daran können die Suspension beziehungsweise die Pasten thermisch behandelt werden. Insbesondere ist es vorgesehen, dass eine sogenannte Entbinderung und Sinterung durchgeführt wird. Auf diese Weise kann ein Festkörper hergestellt werden. Hierbei können der erste Werkstoff der zweite Wirkstoff jeweils ein Ausgangspulver mit geeigneter Partikelform und/oder Partikelfraktionierung umfassen, um ein optimales Sinterverhalten zu erreichen. Zudem können der erste Werkstoff und der zweite Wirkstoff geeignete Additive umfassen, um die gewünschten Eigenschaften des Bauteils zu erzielen. Die Temperaturen und Zeitdauern beim Sintern können an den ersten Werkstoff und/oder den zweiten Werkstoff angepasst werden. Darüber hinaus kann es vorgesehen sein, dass eine thermische Nachbehandlung durchgeführt wird. Somit kann insgesamt ein Gefüge beziehungsweise eine Mikrostruktur mit optimierten funktional magnetischen Eigenschaften und minimalen Verlusten bereitgestellt werden.

In einer weiteren Ausführungsform umfasst der erste Werkstoff einen ersten Massenanteil eines weichmagnetischen Materials und der zweite Werkstoff umfasst einen von dem ersten Massenanteil verschiedenen, zweiten Massenanteil des weichmagnetischen Materials. Dabei kann das weichmagnetische Material Eisen, Cobalt und/oder Nickel umfassen. Hiermit lässt sich sowohl eine Design-Optimierung, beispielsweise zur Reduzierung des Materialeinsatzes beziehungsweise des Gewichts, als auch eine Minimierung von elektrischen Verlusten erreichen. Die Gradierung ist besonders für legierbare Übergangsmetalle wie Eisen, Cobalt und/oder Nickel möglich. Im System Eisen-Cobalt lässt sich die spontane magnetische Induktion von Eisen durch Zulegieren von Cobalt (bis zu einer Hälfte des Massenanteils) kontinuierlich um bis zu 15 % steigern. Somit ist beispielsweise eine Verjüngung des Bauteils ohne Erzeugung von Streufluss oder eine Flusskonzentration möglich. Wenn das Bauteil in einer elektrischen Maschine verwendet wird, lässt sich beispielsweise der Polbereich bei einer Induktions- oder Reluktanzmaschine entweder einengen (Konstruktion schmalerer und/oder leichterer Pole) oder die Induktion dort erhöhen und so das Drehmoment steigern. Ferner können Legierungen mit einer geringen Koerzitivfeldstärke eingesetzt werden, um minimale Hystereseverluste zu erreichen.

Ein weiteres Einsatzgebiet für ein solches Bauteil sind moderne permanenterregte elektrische Maschinen mit hoher Leistungsdichte. Diese sind durch einen hohen Sättigungsgrad (hohe Flussdichte) im weichmagnetischen Werkstoff gekennzeichnet. Hierbei kann beispielsweise die erhöhte Flussleitfähigkeit von Eisen-Cobalt genutzt werden, um den Fluss in der elektrischen Maschine und damit das Drehmoment weiter zu steigern. Im Bereich des Stators können hoch belastet Bereiche, wie Zähne oder Zahnkanten aus Eisen-Cobalt gefertigt werden. In Fall von elektrischen Maschinen mit vergrabenen Magneten kann am Rotor das Dach über den eingeschobenen Magneten aus Eisen-Cobalt gefertigt werden.

Gemäß einer weiteren Ausführungsform werden der erste Massenanteil und/oder der zweite Massenanteil in Abhängigkeit von einer Geometrie des Bauteils bestimmt. Durch die Möglichkeit der Gradierung wird der Tatsache Rechnung getragen, dass im Magnetkreis die magnetische Belastung lokal unterschiedlich beziehungsweise in Gradientenform über die Fläche des Bauteils auftritt. Somit können beispielsweise weichmagnetischen Materialen mit einer hohen Sättigungsinduktion in Bereichen einer elektrischen Maschine mit hoher Induktion beziehungsweise Flusskonzentration eingesetzt werden.

In einer weiteren Ausgestaltung wird zumindest ein drittes Element bereitgestellt und mit dem ersten Element und/oder dem zumindest einen zweiten Element stoffschlüssig verbunden. Wie bereits erläutert, können insbesondere mehrere Elemente beziehungsweise Bereiche des Bauteils vorgesehen sein, wobei sich die Elemente bezüglich der weichmagnetischen Eigenschaften voneinander unterscheiden.

Ein erfindungsgemäßes Bauteil für eine elektrische oder elektronische Komponente, ist mit einem erfindungsgemäßen Verfahren oder einer vorteilhaften Ausgestaltung davon hergestellt. Bevorzugt ist das Bauteil ein Blech eines Aktivteils einer elektrischen Maschine. Das Bauteil kann also ein Einzelblech eines Blechpakets bilden. Dieses Blechpaket kann in dem Aktivteil, also einem Stator und/oder Rotor verwendet werden. Das Bauteil kann auch ein Flussleitelement eines Rotors einer Reluktanzmaschine sein.

Ferner kann das Bauteil Teil eines Transformators sein. Das Bauteil kann auch ein Gehäuse für eine Elektronik oder eines elektronischen Bauteils sein. Außerdem kann das Bauteil Teil eines magnetischen Sensors sein.

Eine erfindungsgemäße elektrische oder elektronische Komponente ist insbesondere eine elektrische Maschine. Die Komponente umfasst ein erfindungsgemäßes Bauteil. Durch den gezielten Einsatz magnetischer Materialien mit unterschiedlicher Sättigungsinstruktion kann einerseits der Einsatz von hochwertigen Materialien reduziert werden und andererseits kann der Wirkungsgrad und die Leistung-beziehungsweise Drehmomentdichte erhöht werden. Dies ist insbesondere der Anwendungen als Traktionsmaschine in Fahrzeugen und Flugzeugen von Interesse. Durch die höhere Kompaktheit steigt sie die Dynamik der elektrischen Maschine, was zu höheren Produktivität im industriellen Einsatz führt.

Die mit Bezug auf das erfindungsgemäße Verfahren vorgestellten bevorzugten Ausführungsformen und deren Vorteile gelten entsprechend für das erfindungsgemäße Bauteil sowie für die erfindungsgemäße Komponente.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- FIG 1: eine schematische Darstellung eines Bauteils, welches mehrere Elemente umfasst, wobei die Elemente jeweils aus einem weichmagnetischen Werkstoff gefertigt sind;
- FIG 2: eine schematische Darstellung einer Reluktanzmaschine, welche in einem Rotor Flussleitelemente aufweist; und
- FIG 3: eine schematische Darstellung eines Flussleitelements, welches durch ein Bauteil gebildet ist.

In den Figuren werden gleiche oder funktionsgleiche Elemente mit den gleichen Bezugszeichen versehen.

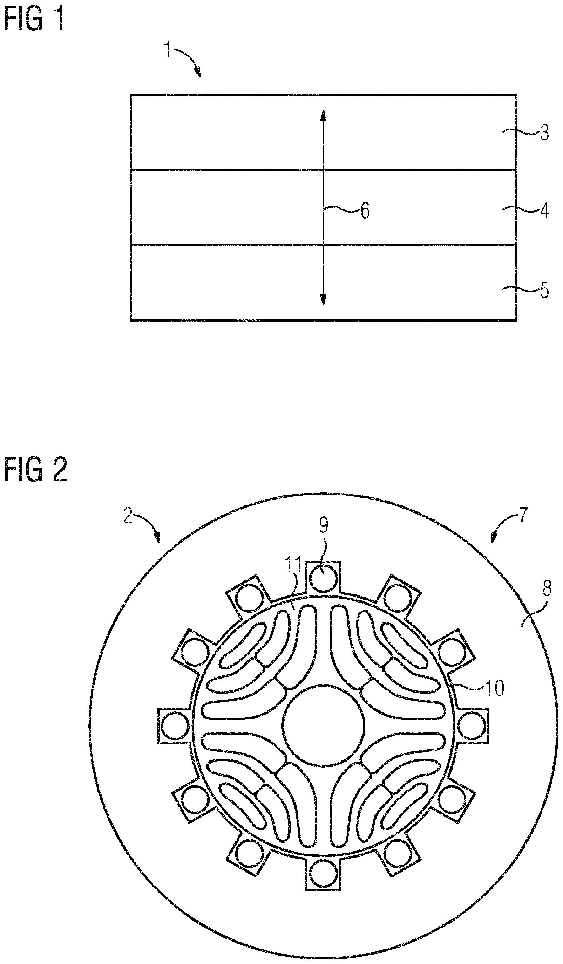

FIG 1 zeigt in einer stark vereinfachten Darstellung ein Bauteil 1, welches in einer elektrischen oder elektronischen Komponente 2 zum Führen eines magnetischen Flusses eingesetzt werden kann. Das Bauteil 1 umfasst zumindest zwei Elemente 3, 4, 5. In dem vorliegenden Ausführungsbeispiel umfasst das Bauteil 1 ein erstes Element 3, ein zweites Element 4 und ein drittes Element 5. Dabei ist das erste Element 3 aus einem ersten weichmagnetischen Werkstoff gefertigt. Das zweite Element 4 ist aus einem zweiten weichmagnetischen Werkstoff gefertigt und das dritte Element 5 ist aus einem dritten weichmagnetischen Werkstoff gefertigt. Beispielweise kann der erste weichmagnetische Werkstoff des ersten Elements 3 Eisen mit einem Massenanteil von 100 % umfassen. Der zweite weichmagnetische Werkstoff des zweiten Elements 4 kann einen Massenanteil von 80 % Eisen und einen Massenanteil von 20 % Cobalt umfassen. Der dritte weichmagnetische Werkstoff kann einen Massenanteil von 50 % Eisen und einen Massenanteil von 50 % Cobalt umfassen.

Zum Herstellen des ersten Elements 3 kann eine erste Suspension verwendet werden, welche Partikel aus Eisen umfasst. Zum Herstellen des zweiten Elements 4 kann eine zweite Suspension verwendet werden, welche Partikel aus Eisen und Cobalt mit den zuvor beschriebenen Masseanteilen umfasst. Schließlich kann zum Herstellen des dritten Elements eine Suspension verwendet werden, welche Partikel aus Eisen und Cobalt mit den zuvor beschriebenen Massenanteilen umfasst. Dabei können die jeweiligen Suspensionen mithilfe eines Druckverfahrens aufgebracht werden. Hierzu kann beispielsweise ein dreidimensionales Druckverfahren oder ein Siebdruckverfahren verwendet werden. Somit können die Elemente 3, 4, 5 beziehungsweise die Suspensionen sequentiell übereinander und/oder nebeneinander aufgetragen werden. Im Anschluss daran können die Elemente 3, 4, 5 entbindet und gesintert werden.

Bei dem Bauteil 1 ergibt sich für das weichmagnetische Material Cobalt ein Gradient bezüglich der Konzentration beziehungsweise des Massenanteils. Dies bewirkt entlang des Bauteils 1 einen Gradienten beziehungsweise eine Gradierung bezüglich der magnetischen Eigenschaften. Die magnetischen Eigenschaften können beispielsweise eine Sättigungsinduktion, eine Koerzitivfeldstärke, eine Magnetostriktion oder dergleichen beschreiben. Bei dem in FIG 1 beispielhaft dargestellten Aufbau des Bauteils 1 aus den übereinander angeordneten Elementen 3, 4, 5 ergibt sich der Gradient der magnetischen Eigenschaften entlang der Hochrichtung. Dies ist durch den Pfeil 6 gekennzeichnet.

FIG 2 zeigt eine Komponente 2 in Form einer elektrischen Maschine 7. In dem vorliegenden Ausführungsbeispiel ist die elektrische Maschine 7 als Reluktanzmaschine ausgebildet. Die elektrische Maschine 7 umfasst einen Stator 8, welcher eine Wicklung 9 aufweist. Des Weiteren umfasst die elektrische Maschine 7 einen Rotor 10, der drehbar zu dem Stator 8 angeordnet ist. Der Rotor 10 umfasst eine Mehrzahl von Flussleitelementen 11 auf, welche zur Führung des magnetischen Flusses dienen.

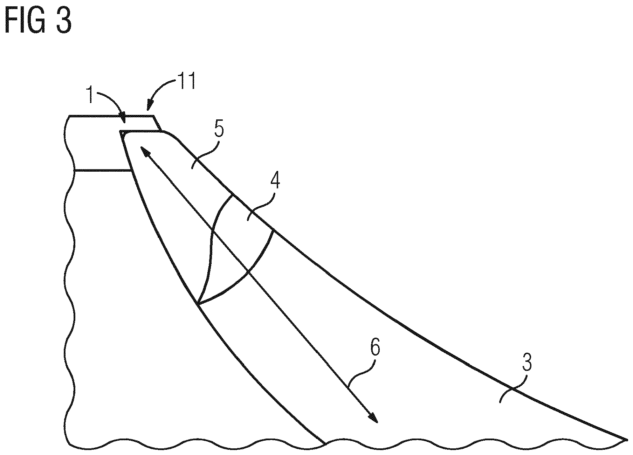

FIG 3 zeigt eine ausschnittsweise Darstellung eines derartigen Flussleitelements 11, welches durch ein zuvor beschriebenes Bauteil 1 bereitgestellt wird. In der vorliegenden vereinfachten Darstellung weist das Bauteil 1 die zuvor beschriebenen Elemente 3, 4, 5 auf. Somit kann in einem Bereich der Konzentration des magnetischen Flusses beziehungsweise einem Bereich mit einem hohen Sättigungsgrad die Flussleitfähigkeit durch den Anteil von Cobalt erhöht werden. Dies wird vorliegend durch das dritte Element 5 erreicht, welches beispielsweise einen Massenanteil an Cobalt von 50 % aufweisen kann. Durch die dadurch bewirkte Erhöhung der Flussleitfähigkeit kann das Drehmoment der elektrischen Maschine 7 weiter gesteigert werden.

Durch die Verwendung des Bauteils 1 kann eine Massereduktion der weichmagnetischen Bereiche durch Einsatz von weichmagnetischen Materialen mit höherer Sättigungsinduktion erreicht werden. Des Weiteren kann ein hoher Wirkungsgrad und eine erhöhte Leistung- und/oder Drehmomentdichte erreicht werden. Hierdurch verringert sich die Erwärmung des Rotors 10. Des Weiteren kann eine geringere Massenträgheit durch kürzere und leichtere Rotoren 10 erreicht werden. Ferner ergeben sich höhere Überlastdrehmomente durch die höhere Induktion. Außerdem kann durch die lokale Optimierung ein geringerer Einsatz von teuren Materialien erreicht werden.

Das zuvor beschriebene Bauteil 1 kann auch in anderen elektrischen Komponenten 2, wie beispielsweise Transformatoren, Drosseln oder dergleichen eingesetzt werden. Es kann auch vorgesehen sein, dass das Bauteil 1 in elektronischen Komponenten verwendet wird. Zudem können auch andere weichmagnetische Materialien beziehungsweise Legierungen, wie beispielsweise Nickel, verwendet werden.

## Patentansprüche

1. Verfahren zum Herstellen eines einen magnetischen Fluss führenden Bauteils (1) für eine elektrische oder elektronische Komponente (2), mit den Schritten:
- Bereitstellen eines ersten Elements (3), welches einen ersten weichmagnetisches Werkstoff umfasst,
- Bereitstellen zumindest eines zweiten Elements (4, 5), welches einen vom dem ersten Werkstoff verschiedenen, zweiten weichmagnetisches Werkstoff umfasst, und
- Verbinden des ersten Elements (3) und des zumindest einen zweiten Elements (4, 5) zu dem Bauteil (1),
**dadurch gekennzeichnet, dass**
- das erste Element (3) und das zumindest eine zweite Element (4, 5) stoffschlüssig miteinander verbunden werden und
- das erste Element (3) und das zumindest eine zweite Element (4, 5) derart bereitgestellt werden, dass magnetische Eigenschaften entlang des Bauteils (1) einen Gradienten aufweisen.

2. Verfahren nach Anspruch 1, **dadurch gekennzeichnet, dass** zum Bereitstellen des ersten Elements (3) eine erste Suspension, welche den ersten Werkstoff umfasst, aufgetragen wird und zum Bereitstellen des zumindest einen zweiten Elements (4, 5) eine zweite Suspension, welche den zweiten Werkstoff umfasst, zumindest bereichsweise auf die erste Suspension aufgetragen wird.

3. Verfahren nach Anspruch 2, **dadurch gekennzeichnet, dass** die erste Suspension und/oder die zweite Suspension mittels eines dreidimensionalen Druckverfahrens aufgetragen werden.

4. Verfahren nach Anspruch 2, **dadurch gekennzeichnet, dass** die erste Suspension und/oder die zweite Suspension mittels eines Siebdruckverfahrens aufgetragen werden.

5. Verfahren nach einem der Ansprüche 2 bis 4, **dadurch gekennzeichnet, dass** die erste Suspension und die zweite Suspension zum Herstellen des Bauteils (1) gesintert werden.

6. Verfahren nach einem der vorhergehenden Ansprüche, **dadurch gekennzeichnet, dass** der erste Werkstoff einen ersten Massenanteil eines weichmagnetischen Materials umfasst und der zweite Werkstoff einen von dem ersten Massenanteil verschiedenen, zweiten Massenanteil des weichmagnetischen Materials umfasst.

7. Verfahren nach Anspruch 6, **dadurch gekennzeichnet, dass** das weichmagnetische Material Eisen, Cobalt und/oder Nickel umfasst.

8. Verfahren nach Anspruch 6 oder 7, **dadurch gekennzeichnet, dass** der erste Massenanteil und/oder der zweite Massenanteil in Abhängigkeit von einer Geometrie des Bauteils (1) bestimmt werden.

9. Verfahren nach einem der vorhergehenden Ansprüche, **dadurch gekennzeichnet, dass** zumindest ein drittes Element bereitgestellt wird und mit dem ersten Element und/oder dem zumindest einen zweiten Element stoffschlüssig verbunden wird.

10. Bauteil (1), welches einen magnetischen Fluss führt, für eine elektrische oder elektronische Komponente (2), wobei das Bauteil mit einem Verfahren nach einem der vorhergehenden Ansprüche hergestellt ist.

11. Bauteil (1)nach Anspruch 10, **dadurch gekennzeichnet, dass** das Bauteil (1)ein Blech eines Aktivteils einer elektrischen Maschine (7) ist.

12. Elektrische oder elektronische Komponente (2) mit einem Bauteil (1) nach Anspruch 10 oder 11.
